# EUROPEAN PATENT APPLICATION

(11) **EP 3 096 144 A1**
(43) Date of publication of application: **23.11.2016**
(21) Application number: 15168781.1
(22) Date of filing: 22.05.2015
(51) Int. Cl.: G01N 35/00, G01N 35/04

(54) **METHOD OF OPERATING A LABORATORY AUTOMATION SYSTEM AND LABORATORY AUTOMATION SYSTEM**

(71) Applicant: Roche Diagnostics GmbH, 68305 Mannheim (DE); F. Hoffmann-La Roche AG, 4070 Basel (CH); Technische Universität München, 80333 München (DE)
(72) Inventor: Furrer, Frédéric, 6048 Horw (CH); Heinz, Philipp, 6343 Rotkreuz (CH); Habenicht, Sebastian, 80799 München (DE); Staab, Tobias, 80339 München (DE); Atz, thomas, 80807 München (DE)
(74) Representative: Patentanwälte Ruff, Wilhelm, Beier, Dauster & Partner mbB

(57) **Abstract**

Method of operating a laboratory automation system (10), wherein the laboratory automation system (10) comprises:
- a number of laboratory stations (20, 21),
- a number of sample container carriers (140), wherein the sample container carriers (140) are adapted to carry one or more sample containers (142), wherein the sample containers (142) comprise samples (143) to be processed by means of the laboratory stations (20, 21),
- a transport plane (110), wherein the transport plane (110) is adapted to support the sample container carriers (140), wherein the transport plane (110) comprises a number of transfer areas (30, 31), wherein a transfer area (30, 31) of the number of transfer areas (30, 31) is assigned to a corresponding laboratory station (20, 21) of the number of laboratory stations (20, 21), wherein samples (143) are transferred to the laboratory stations (20, 21) by moving the corresponding sample container carrier (140) to the assigned transfer area (30, 31), and
- drive means (120), wherein the drive means (120) are adapted to move the sample container carriers (140) on the transport plane (110) independent from one another along individual transport paths,

wherein the method comprises:
- monitoring, if more than one sample (143) is waiting to be processed by a laboratory station (20, 21),
- if more than one sample (143) is waiting to be processed by the laboratory station (20, 21), assigning a dynamic priority to the waiting samples (143) according to at least one priority criteria, and
- moving the sample container carriers (140) carrying the samples (143) in the order of the assigned dynamic priority to the corresponding transfer area (30, 31).

## Description

The invention relates to a method of operating a laboratory automation system and a laboratory automation system.

Laboratory sample distribution systems can be used in order to distribute samples between a plurality of laboratory stations in a laboratory automation system. For example, a two-dimensional laboratory sample distribution system providing high throughput is disclosed in document EP 2 589 968 A1. Electro-magnetic actuators are disposed below a transport plane in order to drive sample container carriers carrying sample containers on the transport plane.

### Object and solution

It is an object of the present invention to provide for a method of operating a laboratory automation system and a laboratory automation system enabling a high sample throughput.

This object is solved by a method of operating a laboratory automation system according to claim 1 and a laboratory automation system according to claim 8.

The method is adapted to operate a laboratory automation system.

The laboratory automation system comprises a number (e.g. 2 to 50) of laboratory stations, e.g. pre-analytical, analytical and/or post-analytical stations. Pre-analytical stations may be adapted to perform any kind of pre-processing of samples, sample containers and/or sample container carriers. Analytical stations may be adapted to use a sample or part of the sample and a reagent to generate a measuring signal, the measuring signal indicating if and in which concentration, if any, an analyte is existing. Post-analytical stations may be adapted to perform any kind of post-processing of samples, sample containers and/or sample container carriers.

The pre-analytical, analytical and/or post-analytical stations may comprise at least one of a decapping station, a recapping station, a centrifugation station, an archiving station, a pipetting station, a sorting station, a tube type identification station, and a sample quality determining station.

The laboratory automation system further comprises a number (e.g. 10 to 10000) of sample container carriers. The sample container carriers are respectively adapted to carry one or more sample containers or sample tubes. The sample containers respectively comprise or contain samples to be processed or analyzed by means of the laboratory stations. Self-evidently, a number of sample containers may exist actually not containing samples, i.e. empty sample containers, e.g. use for aliquoting.

The laboratory automation system further comprises a, e.g. completely planar, transport plane. The transport plane is adapted to support the sample container carriers, i.e. the sample container carriers can be placed on top of the transport plane and can be moved on top of and over the transport plane. The transport plane comprises a number (e.g. 2 to 200) of logically assigned transfer areas or transfer locations. One or more transfer areas of the number of transfer areas is/are assigned to a corresponding laboratory station of the number of laboratory stations. In other words, each laboratory station has at least one assigned transfer area. Samples (sample containers and/or sample container carriers) are transferred to (provided to) the laboratory stations by moving the corresponding sample container carrier carrying the sample container containing the sample to the transfer area assigned to the laboratory station. After the sample container carrier has been moved to the transfer area assigned to the laboratory station, the sample can e.g. be delivered to the laboratory station by means of a pick-and-place device gripping the sample container containing the sample and place the sample container into a sample container rack being arranged inside the laboratory station. After a number of sample containers have been arranged in the sample container rack by repeating the procedure, the laboratory station can start to process the sample containers comprised in the sample container rack. Alternatively, the laboratory station can e.g. comprise an aliquot or pipetting device which is adapted to aliquot or pipet a part of the sample out of the sample container arranged on the transfer area.

The laboratory automation system further comprises drive means. The drive means are adapted to move the sample container carriers simultaneously in two dimensions (x and y) along individual transport paths on the transport plane.

According to the invention, it is monitored, if more than one sample is at the moment waiting to be processed by one of the laboratory stations. If more than one sample is waiting to be processed by the laboratory station, a corresponding dynamic (not static, not predefined, assigned during runtime of the laboratory system) priority is assigned to each of the waiting samples according to at least one priority criteria. The sample container carriers carrying the samples are then moved in the order of the assigned dynamic priority to the corresponding transfer area. The sample container carrier carrying the sample container containing the sample having the highest dynamic priority is moved to the corresponding transfer area first. If this sample container carrier is removed from the transfer area, the sample container carrier carrying the sample container containing the sample having the second highest dynamic priority is moved to the corresponding transfer area, and so on.

According to prior art embodiments, a first-in-first-out (FIFO) queue is provided for each laboratory station, i.e. the samples are provided to the laboratory stations in a FIFO scheme. According to the invention, dynamic priorities are assigned to the samples, significantly increasing the degrees of freedom regarding the order in which the samples are processed. This allows for a high flexibility.

For each waiting sample a maximum turn-around-time can be assigned. The maximum turn-around-time may be predefined. The maximum turn-around-time may be equal for all samples and may e.g. be defined by an operator of the laboratory automation system. The maximum turn-around-time may e.g. range from 1 hour to 4 hours. Alternatively, the maximum turn-around-time may be sample-type-specific and/or may depend on the necessary analyses. A first priority criteria defining the dynamic priority is the assigned maximum turn-around-time.

For each waiting sample a number of following laboratory stations can be determined. The number of following laboratory stations can be determined based on the analyses necessary for the sample, since typically not all types of analyses can be performed by a single laboratory station. A second priority criteria is the number of following laboratory stations.

For each waiting sample an elapsed processing time can be determined, wherein a third priority criteria is the elapsed processing time.

For each waiting sample a static (not dynamic, predefined for the sample) priority can be assigned. The static priority can be assigned to the sample when the sample is supplied to the laboratory automation system. The static priority can e.g. identify an emergency sample and/or a so called STAT (latin for "statim", i.e. at once, immediately) sample. A fourth priority criteria is the static priority.

If the static priority indicates an emergency sample (and/or a STAT sample), the highest available dynamic priority is assigned to the corresponding sample. This allows prioritizing the processing of emergency and/or of STAT samples.

The dynamic priority can be assigned depending on all the above described priority criteria.

For each waiting sample an elapsed processing time may be evaluated or determined. Additionally, for each waiting sample a difference between the corresponding elapsed processing time and the corresponding maximum turn-around-time can be evaluated. The dynamic priority for each waiting sample is then assigning inversely proportional to the corresponding evaluated difference. On other words, if the elapsed processing time is approaching the maximum turn-around-time, the dynamic priority is increased. This allows for a balancing of the overall turn-around-times of the processed samples, i.e. the variance of the sample processing times is reduced.

The laboratory automation system comprises a number of laboratory stations, a number of sample container carriers, wherein the sample container carriers are adapted to carry one or more sample containers, wherein the sample containers comprise samples to be processed by means of the laboratory stations, a transport plane, wherein the transport plane is adapted to support the sample container carriers, wherein the transport plane comprises a number of transfer areas, wherein a transfer area of the number of transfer areas is assigned to a corresponding laboratory station of the number of laboratory stations, wherein samples are transferred to the laboratory stations by moving the corresponding sample container carrier to the assigned transfer area, and drive means, wherein the drive means are adapted to move the sample container carriers on the transport plane independent from one another along individual transport paths. The laboratory automation system further comprises a control unit, e.g. in the form of a personal computer, wherein the control unit is adapted to control the drive means such that an inventive method is performed. The control unit can further be adapted to control the laboratory stations and/or transfer-devices performing a transfer or transport of samples, and/or sample containers, and/or sample container carriers between the transfer areas of the transport plane and the laboratory stations such that the inventive method is performed.

The sample container carriers can comprise at least one magnetically active device, preferably at least one permanent magnet. The drive means can comprise a number (e.g. 64 to 2000) of electro-magnetic actuators being stationary arranged in rows and columns below the transport plane. The electro-magnetic actuators can be adapted to apply a magnetic drive force to the sample container carriers. The control unit can be adapted to activate the electromagnetic actuators such that the sample container carriers move over the transport plane and are e.g. be transported to one of the transfer areas.

### Short description of the drawings

Fig. 1 shows a laboratory automation system in a perspective view and
Fig. 2 schematically a transport plane of the laboratory automation system in a top view.

### Detailed description of the embodiments

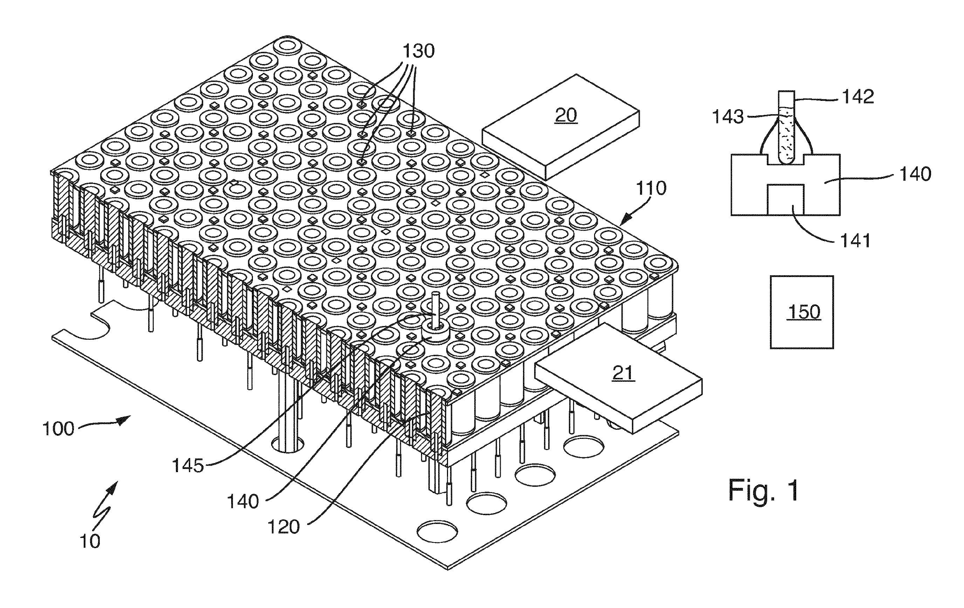

Fig. 1 shows a laboratory automation system 10 in a perspective view. The laboratory automation system 10 comprises two exemplary laboratory stations 20 and 21 arranged adjacent to a transport plane 110. The laboratory stations 20, 21 are distributed as depicted along the outline of the transport plane 110.

The transport plane 110 is adapted to carry a plurality of sample container carriers 140, wherein for the sake of explanation only a single sample container carrier 140 is depicted. Self-evidently typically a large number of sample container carriers 140 are arranged on the transport plane 110. The sample container carriers 140 each comprise a magnetically active device 141 in the form of a permanent magnet. The sample container carriers 140 carry sample containers 142 containing a respective sample 143.

Drive means 120 in the form of electro-magnetic actuators are stationary arranged in rows and columns below the transport plane 110. The electro-magnetic actuators 120 are adapted to apply a magnetic drive force to the sample container carriers 140, such that sample container carriers 140 are distributed over the transport plane 110 on desired transport paths simultaneously and independent from one another, if necessary.

Hall sensors 130 are distributed over the transport plane 110. The hall sensors 130 are adapted to determine the respective positions of the sample container carriers 140 on the transport plane 110.

The laboratory automation system 10 comprises a control unit 150. The control unit 150 is adapted to control or activate the electromagnetic actuators 120 such that the sample container carriers move 140 over the transport plane 110.

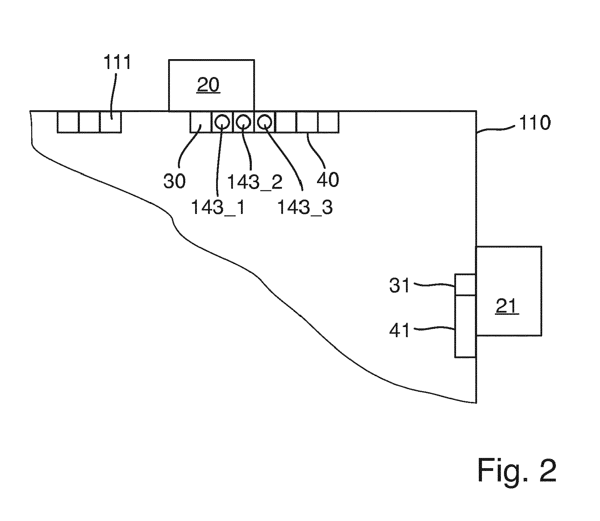

Fig. 2 schematically shows the transport plane 110 in a top view. The transport plane 110 is logically segmented into equally-sized, square shaped logical fields 111. Each logical field 111 is assigned to, i.e. covers, a corresponding electro-magnetic actuator 120 as depicted in Fig. 1.

The transport plane 110 comprises two of transfer areas 30, 31. The transfer area 30 is assigned to the laboratory station 20 and the transfer area 31 is assigned to the laboratory station 21. Samples 143 are transferred to the laboratory stations 20, 21 by moving the corresponding sample container carrier 140 to the assigned transfer area 30 and 31, respectively.

A buffer area 40 is logically defined adjacent to the laboratory stations 20. Accordingly, a buffer area 41 is logically defined adjacent to the laboratory stations 21. If more than one sample is waiting to be processed by a corresponding laboratory station 20 or 21, the corresponding sample containers are buffered inside the corresponding buffer areas 40 and 41, respectively.

The transfer areas 30, 31 and the buffer areas 40, 41 are logically formed from an integer number of respective logical fields 111. The transfer areas 30, 31 can e.g. be formed from a respective single logical field 111. The buffer areas 40, 41 can be formed from a plurality of logical fields 111, e.g. 5 to 100 logical fields 111.

The control unit controls the sample flow by driving the drive means 120 as follows.

As depicted in Fig. 2, three samples 143_1, 143_2, 143_3 are waiting to be processed by the laboratory station 20 and are located inside the buffer area 40.

In order to prioritize the sample processing, the control unit 150 assigns a dynamic priority to each of the waiting samples 143_1, 143_2, 143_3. The sample container carriers 140 carrying the samples 143_1, 143_2, 143_3 are moved to the transfer area 30 in the order of the assigned dynamic priority by accordingly controlling the drive means 120. The drive means 120 can be controlled such that in the depicted situation each sample 143_1, 143_2, 143_3 can be moved to the transfer area 30. If one of the samples 143_1, 143_2, 143_3 is positioned on the transfer area or location 30, the corresponding sample container 142 containing the sample 143_1, 143_2, 143_3 can be transferred to the laboratory station 20, wherein the corresponding sample container carrier 140 is then removed from the transfer area 30, such that further samples can be transferred to the laboratory station 20.

If a sample has been processed by the laboratory station 20, the corresponding sample container 142 can be transferred back to the transport plane 110 using the transfer location 30 or using another path. If the transfer location 30 is used for returning the sample container 142, an empty sample container carrier 140 is moved to the transfer area 30 and the sample container 142 is inserted into the sample container carrier 140. Then, the loaded sample container carrier 140 is removed from the transfer area 30.

The dynamic priority for the waiting samples 143_1, 143_2, 143_3 is assigned as follows.

If one of the waiting samples 143_1, 143_2, 143_3 is an emergency sample or a STAT sample, the highest available dynamic priority is assigned. If more than one sample is an emergency or STAT sample, the emergency samples are e.g. processed in a first-come-first-served order.

The control unit 150 continuously evaluates for each sample being processed by means of the laboratory automation system 10 an elapsed processing time. Further, for each sample being processed by means of the laboratory automation system 10 an identical maximum turn-around-time of two hours is logically assigned.

The control unit 150 evaluates for each waiting sample 143_1, 143_2, 143_3 a difference between the corresponding elapsed processing time and the corresponding maximum turn-around-time. The dynamic priority for each waiting sample is then assigning inversely proportional to the corresponding evaluated difference. On other words, if the elapsed processing time is approaching the maximum turn-around-time, the dynamic priority is increased. This allows for a balancing of the overall turn-around-times of the processed samples, i.e. the variance of the sample processing times is reduced.

Self-evidently, more than the described criteria may be used for determining the dynamic priority. E.g., a number of following laboratory stations needed for the complete analyses workflow for each sample can be determined, wherein these numbers can be used as a priority criteria.

The same prioritization scheme as described with respect to laboratory station 20 can be used for laboratory station 21.

Although only two laboratory stations 20, 21 are depicted for the sake of explanation, the laboratory automation system 10 typically comprises more than two laboratory stations.

## Claims

1. Method of operating a laboratory automation system (10), wherein the laboratory automation system (10) comprises:
- a number of laboratory stations (20, 21),
- a number of sample container carriers (140), wherein the sample container carriers (140) are adapted to carry one or more sample containers (142), wherein the sample containers (142) comprise samples (143) to be processed by means of the laboratory stations (20, 21),
- a transport plane (110), wherein the transport plane (110) is adapted to support the sample container carriers (140), wherein the transport plane (110) comprises a number of transfer areas (30, 31), wherein a transfer area (30, 31) of the number of transfer areas (30, 31) is assigned to a corresponding laboratory station (20, 21) of the number of laboratory stations (20, 21), wherein samples (143) are transferred to the laboratory stations (20, 21) by moving the corresponding sample container carrier (140) to the assigned transfer area (30, 31), and
- drive means (120), wherein the drive means (120) are adapted to move the sample container carriers (140) on the transport plane (110) independent from one another along individual transport paths,
wherein the method comprises:
- monitoring, if more than one sample (143_1, 143_2, 143_3) is waiting to be processed by a laboratory station (20, 21),
- if more than one sample (143_1, 143_2, 143_3) is waiting to be processed by the laboratory station (20, 21), assigning a dynamic priority to the waiting samples (143_1, 143_2, 143_3) according to at least one priority criteria, and
- moving the sample container carriers (140) carrying the samples (143_1, 143_2, 143_3) in the order of the assigned dynamic priority to the corresponding transfer area (30, 31).

2. Method according to claim 1,
**characterized in that**
- for each waiting sample (143_1, 143_2, 143_3) a maximum turn-around-time is assigned, wherein a first priority criteria is the assigned maximum turn-around-time.

3. Method according to claim 1 or 2,
**characterized in that**
- for each waiting sample (143_1, 143_2, 143_3) a number of following laboratory stations is determined, wherein a second priority criteria is the number of following laboratory stations.

4. Method according to one of the preceding claims,
**characterized in that**
- for each waiting sample (143_1, 143_2, 143_3) an elapsed processing time is determined, wherein a third priority criteria is the elapsed processing time.

5. Method according to one of the preceding claims,
**characterized in that**
- for each waiting sample (143_1, 143_2, 143_3) a static priority is assigned, wherein a fourth priority criteria is the static priority.

6. Method according to claim 5,
**characterized in that**
- if the static priority indicates an emergency sample, the highest available dynamic priority is assigned to the corresponding sample.

7. Method according to one of claims 2 to 6,
**characterized by** the steps
- for each waiting sample (143_1, 143_2, 143_3) determining an elapsed processing time,
- for each waiting sample (143_1, 143_2, 143_3) evaluating a difference between the elapsed processing time and the maximum turn-around-time, and
- for each waiting sample (143_1, 143_2, 143_3) assigning the dynamic priority inversely proportional to the corresponding evaluated difference.

8. Laboratory automation system (10), comprising:
- a number of laboratory stations (20, 21),
- a number of sample container carriers (140), wherein the sample container carriers (140) are adapted to carry one or more sample containers (142), wherein the sample containers (142) comprise samples (143) to be processed by means of the laboratory stations (20, 21),
- a transport plane (110), wherein the transport plane (110) is adapted to support the sample container carriers (140), wherein the transport plane (110) comprises a number of transfer areas (30, 31), wherein a transfer area (30, 31) of the number of transfer areas (30, 31) is assigned to a corresponding laboratory station (20, 21) of the number of laboratory stations (20, 21), wherein samples (143) are transferred to the laboratory stations (20, 21) by moving the corresponding sample container carrier (140) to the assigned transfer area (30, 31),
- drive means (120), wherein the drive means (120) are adapted to move the sample container carriers (140) on the transport plane (110) independent from one another along individual transport paths, and
- a control unit (150), wherein the control unit (150) is adapted to control the drive means such that a method according to one of the preceding claims is performed.

9. Laboratory automation system according to claim 8,
- wherein the sample container carriers (140) comprise at least one magnetically active device (141), preferably at least one permanent magnet,
- wherein the drive means (120) comprise a number of electro-magnetic actuators being stationary arranged in rows and columns below the transport plane (110), wherein the electro-magnetic actuators are adapted to apply a magnetic drive force to the sample container carriers (140), and
- wherein the control unit (150) is adapted to activate the electromagnetic actuators such that the sample container carriers move (140) over the transport plane (110).
